# EUROPÄISCHE PATENTSCHRIFT

(11) **EP 0 645 075 B1**
(45) Veröffentlichungstag und Bekanntmachung des Hinweises auf die Patenterteilung: **29.12.1999**
(21) Anmeldenummer: 94113847.1
(22) Anmeldetag: 03.09.1994
(51) Int. Cl.: A01B 73/04

(54) **Werkzeugträger für Bodenbearbeitungs- und Bodenbehandlungsmaschinen**
Tool bar for soil working and handling implement
Bar d'outils pour machine pour traitement et travail du sol

(30) Priorität: 06.09.1993 DE 4330022
(43) Veröffentlichungstag der Anmeldung: 29.03.1995
(73) Patentinhaber: Horsch Maschinen GmbH, D-94405 Landau/Isar (DE)
(72) Erfinder: Horsch, Michael, D-92421 Schwandorf (DE)
(74) Vertreter: Wasmeier, Alfons, Dipl.-Ing.

(56) Entgegenhaltungen:
- DE-A- 4 018 422
- US-A- 3 738 682
- US-A- 4 318 444
- US-A- 5 088 563

## Beschreibung

Die Erfindung betrifft einen Werkzeugträger nach dem Oberbegriff des Anspruches 1.

Mit zunehmender Größe von zu bearbeitenden landwirtschaftlichen Flächen wächst der Bedarf an Maschinen immer größer werdender Arbeitsbreite. Dies gilt in gleicher Weise für Bodenbearbeitungsgeräte wie z.B. Grubber, Eggen und dergl., wie auch für Bodenbehandlungsgeräte, wie z.B. Spritzgeräte, Sävorrichtungen und dergl., also für Maschinen, die unter der Bodenoberfläche, auf der Bodenoberfläche und über der Bodenoberfläche arbeiten. Maschinenbreiten von 8 Metern und darüber sind hierbei heutzutage gängig. Damit derartige Maschinen auf der Straße transportiert bzw. gefahren werden können, ist es notwendig, die Breite solcher Maschinen auf maximal 3 Meter zu reduzieren.

Dies geschieht in der Regel dadurch, daß derartige überbreite Maschinen bzw. Ausleger solcher Maschinen eingeschwenkt oder eingeklappt werden, damit sie für Straßenfahrt geeignet sind.

Aus der DE 40 18 422 A1 ist ein Bodenbearbeitungsgerät bekannt, das einen festen Grundrahmen und zwei über Schwenkhebel am Querträger des Grundrahmens angelenkte und mit Hilfe eines Hydraulikzylinders nach oben verschwenkbare Seitenrahmen aufweist. Die Seitenrahmen mit den Werkzeugen werden um 90° aus der waagerechten in die horizontale Position geschwenkt. Die Gesamtarbeitsbreite eines derartigen Bodenbearbeitungsgerätes ist somit durch die Länge der am Grundrahmen befestigten aus- und hochklappbaren Tragrahmen und durch die Anlenkpunkte der beiden Tragrahmen am Grundrahmen bestimmt. Des weiteren ist bei einem derartigen Bodenbearbeitungsgerät vorgesehen, zur Erleichterung des Verschwenkens der walzenförmigen Geräte die Seitenrahmen seitlich verschiebbar auf den Schwenkhebeln zu lagern, damit das näher an der Schwenkachse befindliche Ende des walzenförmigen Gerätes beim Verschwenken nicht in Bodenberührung kommt. Mit einem derartigen Bodenbearbeitungsgerät wird erreicht, daß bei einem Grundrahmen mit einer Breite von 2,5 oder 3 m und einer Breite der beiden Seitenrahmen von 1 - 1,5 m bei verschwenkten Seitenrahmen die zulässige Gesamtbreite für die Straßenfahrt von 3 m nicht überschritten wird. Die maximale Gesamtarbeitsbreite eines derartigen Bodenbearbeitungsgerätes setzt sich somit zusammen aus der Breite des Grundrahmens und der doppelten Breite eines Seitenrahmens.

Aufgabe der Erfindung ist es, ein weitausladendes Bodenbearbeitungsgerät mit einer gesamten Arbeitsbreite von 8 m und darüber so zusammenklappbar auszugestalten, daß für die Straßenfahrt im zusammengeklappten Zustand eine Breite von maximal 3 m und eine Transporthöhe von maximal 4 m erreicht wird, und einen Mechanismus zu schaffen, der diesen Einklappvorgang auf besonders einfache und zweckmäßige Weise ermöglicht.

Gemäß der Erfindung wird dies mit den Merkmalen des Kennzeichens des Anspruches 1 erreicht. Weitere Ausgestaltungen der Erfindung sind Gegenstand der Unteransprüche.

Der Auslegerahmen einer derartigen Maschine hat einen zur Mittenachse symmetrischen Aufbau und besitzt einen mittleren, feststehenden Abschnitt sowie jeweils einen von diesem mittleren Abschnitt ausgehenden linken und rechten einklappbaren bzw. einschwenkbaren Auslegerabschnitt.

Der feststehende Mittelabschnitt nach der Erfindung weist an den beiden äußeren Enden Befestigungsstellen zur Aufnahme der klappbaren Auslegerarme und eines Mittelrahmens auf, in dem die Lagerstellen für die Auslegerarme angeordnet sind; ferner ist der Mittelabschnitt der Auslegeranordnung beidseitig nach außen bis zu einer Breite von insgesamt etwa 3 m verlängert, wobei diese Verlängerung die Abstützung der schwenkbaren Auslegerabschnitte bildet und die Verlängerungen integraler Bestandteil des gesamten Werkzeugträgers sind.

Die beiden schwenkbaren Auslegerarme, die aus der horizontalen Stellung (Betriebsposition) in die vertikale Stellung (Straßenfahrt) schwenkbar sind, bestehen bei einem Werkzeugträger ungemäß der Erfindung aus Doppelträgern, deren äußerer der eigentliche Werkzeugträgerabschnitt, und deren innerer eine damit fest verbundene Teleskoprohranordnung ist. Der feste Teil der Teleskoprohranordnungen ist mit dem Mittelrahmen über die Lagerstellen schwenkbar verbunden. Über dem fest angeordneten Rohr ist ein teleskopförmig bzw. muffenförmig verschiebbares Rohr angeordnet, das mit dem parallelen, fest verbundenen Auslegerrohr zusammen beweglich ist. Das Ausfahren wie auch das Verschwenken dieser Rohranordnung erfolgt mit Hilfe von getrennten Arbeitszylindern, die zwischen dem oberen Ende des festen Trägers und dem unteren Bereich des beweglichen Rohres bzw. dem Mittelrahmen eingesetzt sind, sodaß bei Betätigung der eine Arbeitszylinder das bewegliche Rohr mit dem Auslegerträger, der die Werkzeuge der Maschine aufnimmt, um eine bestimmte, dem Hub des Arbeitszylinders entsprechende Strecke anheben kann, und der andere Arbeitszylinder den gesamten beweglichen Teil des Auslegers aus der horizontalen in die vertikale Stellung und umgekehrt verschwenken kann. In der angehobenen bzw. ausgefahrenen Position der Teleskopanordnung hat der Auslegerträger die Position erreicht, in der er aus der Vertikalen in die Horizontale geklappt bzw. geschwenkt werden kann, wobei in dieser Stellung das innere Ende der Auslegeranordnung an das äußere Ende der Verlängerung des Mittelträgers anschließt, so daß die Auslegeranordnung den äußeren Teil des Gesamtauslegers bildet. In hochgeschwenktem und abgesenktem Zustand der Auslegeranordnung ist ein mit den Teleskoprohr verbundener Flansch mit dem Mittelrahmen über eine Schnellverriegelung befestigt, die zum Schwenken von der vertikalen in die horizontale Position gelöst wird; die Verriegelung kann so gewählt werden, daß ein mit dem Teleskoprohr verbundener Fanghaken die Ausleger beim Absenken mit dem Mittelrahmen verriegelt.

Hierdurch wird erreicht, daß für Straßenfahrt die Gesamtbreite des Werkzeugträgers (in eingeklapptem Zustand) durch die äußeren Enden der beiden Verlängerungen des Mittelträgers, bzw., wenn diese Verlängerungen in der horizontalen Ebene verschwenkbar ausgeführt werden, durch die Außenabmessungen der beiden hochgeklappten Werkzeugtragarme bestimmt ist, während in Arbeitsstellung (in ausgeklapptem Zustand) die Arbeitsbreite gleich Länge des Mittelträgers + zweifache Verlängerung + zweifache Länge des Werkzeugtragarmes ist. Die maximale Höhe des Werkzeugtägers in hochgeklapptem Zustand ist durch die Länge des festen Teleskopträgers bzw. bei Arbeitsbreiten ab 9 m durch die Breite der seitlichen Ausleger bestimmt.

Bei einer bevorzugten Ausführungsform der Erfindung ist eine teleskopartige Traganordnung vorgesehen, die vorzugsweise aus zwei konzentrischen, relativ zueinander beweglichen Rohren besteht. Das feststehende Rohr bzw. das Rohr fester Länge ist am Mittelrahmen im Abstand zur Mittelachse des Gesamtgerätes gelagert und steht mit einem am Mittelträger angelenkten Arbeitszylinder verschwenkbar. Der bewegliche Teil der Teleskopanordnung weist eine Führung auf, die den Auslegerarm starr aufnimmt, so daß eine Verschiebung des beweglichen Teils der Teleskopanordnung in radialer Richtung nach außen in gleichem Maße eine Verschiebung des Auslegerarmes nach außen bewirkt. Die lineare Bewegung des beweglichen Teleskopträgers entlang dem feststehenden Teleskopträger erfolgt kontinuierlich während des Ein- und Ausklappens der Auslegerarme mit Hilfe einer zwischen Mittelrahmen und Auslegerarm gelenkig angeordneten Schubstange. Das fest angeordnete Teleskoprohr umschließt das bewegliche Teleskoprohr; beispielsweise ist hierbei das fest angeordnete Teleskoprohr an der Unterseite geschlitzt und nimmt dadurch das bewegliche, innere Teleskoprohr auf. Die Schubstange ist so angeordnet, daß in ein- bzw. ausgeklapptem Zustand die gleichen Abstände bzw. Abmessungen realisiert werden, wie im Falle der vorstehend beschriebenen Ausführungsform. Die Stellung des beweglichen Teleskoparmes im ausgeklappten Zustand wird durch die Schubstange eindeutig definiert und fixiert, so daß eine zusätzliche Verriegelung nicht erforderlich ist.

In der horizontalen bzw. ausgeklappten Position des Auslegerarmes hat der Werkzeugträger eine Arbeitsbreite, die aufgrund der erfindungsgemäßen Ausgestaltung um den Abstand größer ist, um den das bewegliche Teleskoprohr im fest angeordneten Teleskoprohr verschoben werden kann.

Nachstehend wird die Erfindung in Verbindung mit der Zeichnung anhand einem Ausführungsbeispiel erläutert. Es zeigt:
- Fig. 1: einen Werkzeugträger ungemäß der Erfindung, bei der in Vorderansicht der Werkzeugträger in hochgeklapptem Zustand der Auslegeranordnung dargestellt ist, und
- Fig. 2: eine bevorzugte Ausführungsform der Erfindung, bei der ebenfalls in Vorderansicht der erfindungsgemäße Werkzeugträger in drei unterschiedlichen Positionen dargestellt ist (wobei nur die rechte Hälfte der symmetrischen Gesamtanordnung gezeigt ist).

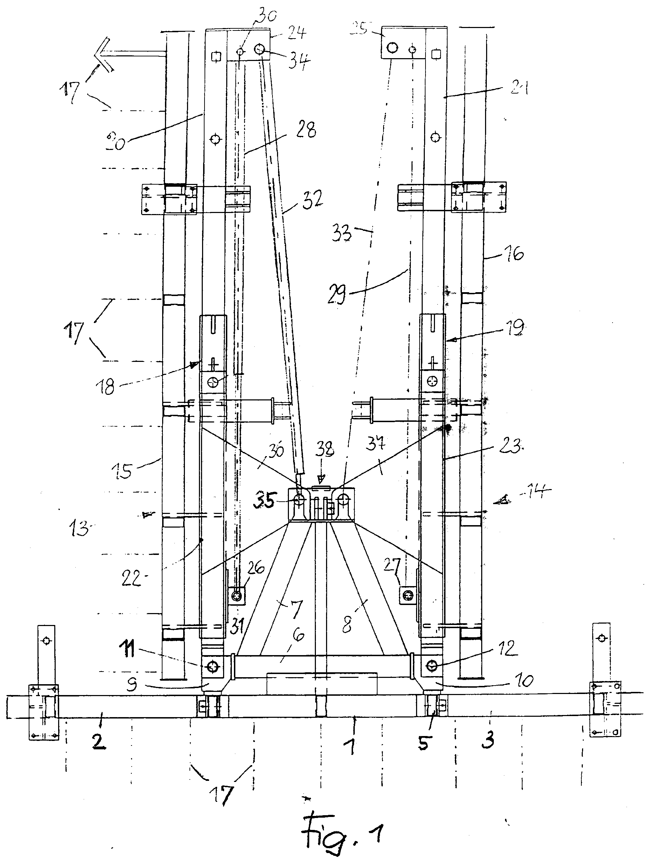

Bei dem Werkzeugträger nach Fig. 1 weist ein horizontaler Mittelträger 1 eine linke und eine rechte Trägerverlängerung 2, 3 an Verbindungsstellen 4, 5 auf (die gesamte Anordnung ist symmetrisch um die Mittelachse MA ausgebildet). Mit den Verbindungsstellen 4, 5 ist ein mittiger Rahmen 6, 7, 8, 9, 10 verbunden, der aus einem horizontalen Träger 6, schräg aufeinander zu laufenden aufrechten Trägern 7, 8 und am Ende des horizontalen Trägers 6 angeordneten Befestigungsköpfen 9, 10 besteht, die mit den Verbindungsstellen 4, 5 verbunden sind und Lagerstellen 11, 12 für die Anlenkung der klappbaren Auslegerarmanordnungen 13, 14 aufweisen. Die Auslegerarmanordnungen 13, 14 bestehen jeweils aus einem Werkzeugtragarm 15, 16, die die Werkzeuge 17 aufnehmen, sowie einer Teleskoptragarmanordnung 18, 19 parallel zu den Tragarmen 15, 16 und mit diesen verbunden. Die Teleskoptragarmanordnung besteht jeweils aus einem festen Teleskopträger 20, 21 sowie jeweils einem diesen muffenartig übergreifenden beweglichen Träger bzw. Teleskoprohr 22, 23. Am obersten Ende des festen Teleskopträgers 20, 21 ist ein Flansch 24, 25, am unteren Ende des beweglichen Teleskoprohres 22 ein Flansch 26, 27 befestigt, zwischen denen ein Arbeitszylinder eines Paares von Arbeitszylindern 28, 29 eingesetzt ist, der den beweglichen Teleskopträger 22, 23 zusammen mit dem Werkzeugtragarm 15, 16 in eine oberste Stellung bewegt, in der der feste und der bewegliche Tragarm miteinander verriegelt werden. Diese oberste Position stellt den ausgefahrenen Zustand der Teleskoptraganordnung 13, 14 dar.

In dieser Position wird die Teleskoptraganordnung 13, 14 um die Lagerstelle 11, 12 in die horizontale (Arbeits-) Position mit Hilfe eines weiteren Paares von Arbeitszylindern (vorzugsweise hydraulische Arbeitszylinder) 32, 33 verschwenkt, diezwischen einer Befestigungsstelle 34 am oberen Ende des feststehenden Trägers 20 und einer Lagerstelle 35 am Mittelrahmen 6, 7, 8, 38 angeordnet sind, derart, daß das in der Zeichnung unterste Ende des Werkzeugtragarmes unmittelbar an das äußere Ende der Trägerverlängerung 2, 3 anschließt, so daß nach entsprechender Befestigung die beiden Auslegerarme links und rechts von den Verlängerungsarmen 2 und 3 ihre volle Arbeitsbreite einnehmen.

Ist die Teleskoptragarmanordnung in die vertikale Position geschwenkt, wird in der in der abgesenkten Stellung der Tragarmanordnung 18, 19 gezeichneten Position ein mit den beweglichen Teleskopträger verbundener Flansch 36, 37 mit dem Kopf 38 des mittigen Rahmens 6 - 10 verriegelt, so daß für die Straßenfahrt eine hohe Stabilität und Sicherheit erreicht ist.

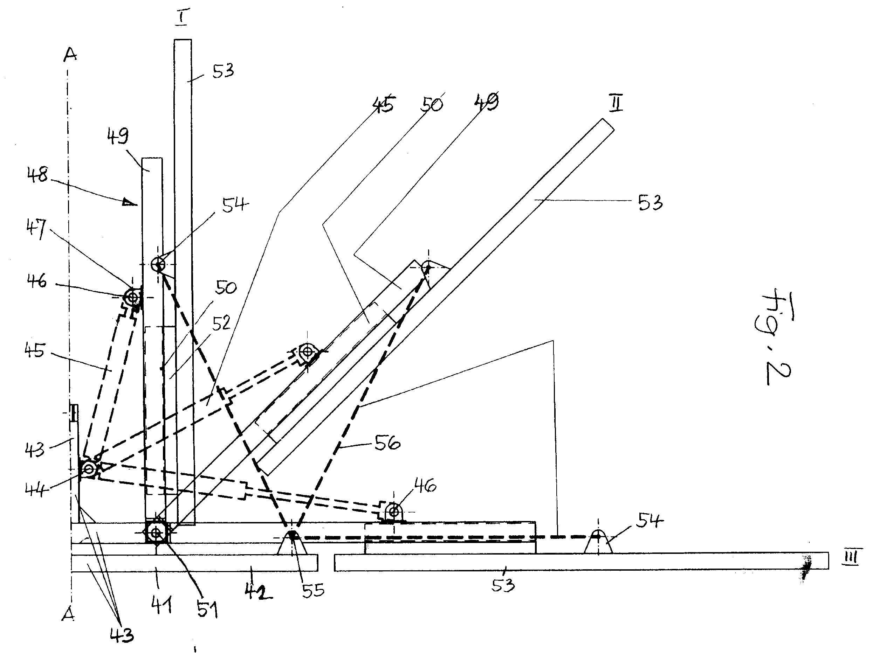

Die in Fig. 2 gezeigte Anordnung zeigt die rechte Hälfte einer zur Mittelachse A-A symmetrischen Gesamtanordnung. Ein horizontaler Mittelträger 41 nimmt einen Mittelrahmen 43 mit Verlängerung 42 auf. Am Mittelrahmen 43 ist eine Lagerstelle 44 befestigt, in der in Arbeitszylinder 45 gelenkig gelagert ist. Der Arbeitszylinder 45 ist in einer Lagerstelle 46 eines Flansches 47 gelenkig gelagert, der starr mit einem Rohr 49 fester Länge einer Trägerrohranordnung 48 befestigt ist, in dem ein bewegliches Trägerrohr 50 teleskopisch geführt ist. Das Rohr 49 fester Länge ist bei 51 gelenkig am Querteil des Mittelrahmens 43 befestigt, und das teleskopisch verschiebbare Rohr 50 ist über eine starre Verbindung 52 mit dem Auslegerarm 53 verbunden. Am Auslegerarm ist eine Lagerstelle 54 vorgesehen, die ein Ende einer Schubstange 56 aufnimmt, deren anderes Ende bei 55 gelagert ist. Die Lagerstelle 55 ist an der Verlängerung des Mittelträgers befestigt.

Wird der Arbeitszylinder 45 ausgefahren, wird die Tragarmanordnung 48 um die Lagerstelle 51 verschwenkt. Da die Schubstange 56 eine feste Länge hat, wird die Lagerstelle 54 der Schubstange mit verschwenkt und das bewegliche Trägerrohr 50 im Trägerrohr 49 teleskopisch radial nach außen verschoben. In der ausgefahrenen Position nimmt der Auslegerarm 53 die Stellung III ein, während die Ausgangsstellung mit I und eine Zwischenstellung mit II bezeichnet ist. In der End- bzw. Arbeitsstellung nimmt der Auslegerarm 53 die in Linie mit dem Mittelträger 41 befindliche horizontale Position ein.

Die Lagerstelle 51 der Anordnung ist im Abstand a von der Mittelachse A-A radial nach außen versetzt angeordnet, die Lagerstelle 55 der Schubstange 56 ist um einen größeren Abstand b von der Mittelachse A-A auf der Verlängerung 42 des Mittelträgers 41 befestigt. Beide Lagerstellen 51 und 55 sind ortsfest. Die Verlängerung der Arbeitsbreite entspricht dem Abstand, um den sich das verschiebbare Teleskoprohr im Teleskoprohr fester Länge radial nach außen bewegt, wenn es aus der vertikalen Ruheposition in die horizontale Arbeitsposition verschwenkt wird.

## Patentansprüche

1. Werkzeugträger für Bodenbearbeitungs- und Bodenbehandlungsmaschinen, mit einem Rahmen mit einer Mindestarbeitsbreite von ca. 8 m, der für Straßenfahrt auf eine Breite bis maximal 3 m und eine Transporthöhe bis maximal 4 m reduzierbar ist, bei dem ein horizontaler Mittelträger (1; 41) mit einem Mittelrahmen (6 - 10; 43) fest verbunden ist, und bei dem eine Tragarmanordnung (18, 19; 48) mit einem Arbeitszylinder (28, 29; 45) so gekoppelt ist, daß die Tragarmanordnung und damit der Werkzeugträger aus der vertikalen Position für Straßenfahrt in die horizontale, verlängerte Arbeitsposition bewegbar ist,
bei dem
a) an den Mittelträger (1, 41) links und rechts nach außen eine Verlängerung (2, 3; 42) anschließt, wobei Mittelträger (1; 41) und die beidseitigen Verlängerungen (2, 3; 42) zusammen eine Länge von maximal 3 m haben,
b) am Mittelrahmen (6 - 10; 43) eine Klapparmanordnung (13, 14; 48) mit einer teleskopartigen Tragarmanordnung (18, 19; 49, 50) schwenkbar (bei 11, 12; 51) befestigt ist, die in der Arbeitsposition horizontal an die Verlängerung (2, 3; 42) anschließt, und
c) die teleskopartige Tragarmanordnung (18, 19; 49, 50) aus einem feststehenden Träger (20, 21; 49) fester Länge und einem damit verbundenen, diesem gegenüber verschiebbaren Träger (22, 23; 50) besteht sowie einen mit dem längenverschiebbaren Träger (22, 23; 50) fest verbundenen, parallel zu diesem angeordneten Werkzeugträger bzw. Auslegerarm (15, 16; 53) aufweist,
**dadurch gekennzeichnet,** daß
d) zwischen der Verlängerung (2, 3, 42) des Mittelträgers (41) und dem Werkzeugträger bzw. Auslegerarm (53) eine jeweils gelenkig gelagerte Verbindung (54, 55, 56) fester Länge angeordnet ist, und daß
e) zwischen einer Lagerstelle (44) des Mittelrahmens (43) und einer Lagerstelle (46) des Teleskopträgers (49) fester Länge ein Arbeitszylinder (45) angelenkt ist, der die Klapparmanordnung (48) zusammen mit dem Auslegerarm (53) um eine Schwenkstelle (50) aus der vertikalen Ruheposition in die horizontale Arbeitsposition verschwenkt.

2. Werkzeugträger nach Anspruch 1, dadurch gekennzeichnet, daß eine Schubstange (56) zwischen Werkzeugträger bzw. Auslegerarm (53) und Verlängerung des Mittelträgers (41) angelenkt ist (bei 54, 55).

3. Werkzeugträger nach Anspruch 1, dadurch gekennzeichnet, daß der Teleskopträger (49) fester Länge den verschiebbaren Teleskopträger (50) konzentrisch umschließt, und daß der verschiebbare Teleskopträger (50) im Teleskopträger (49) fester Länge geführt ist.

4. Werkzeugträger nach Anspruch 2, dadurch gekennzeichnet, daß der Teleskopträger (49) fester Länge einen Längsschlitz aufweist, in dem der verschiebbare Teleskopträger (50) mit dem Verbindungsstück (52) geführt ist.

5. Werkzeugträger nach einem der Ansprüche 3 oder 4, dadurch gekennzeichnet, daß die stationäre Schwenkstelle (51) der Klapparmanordnung (48) im Abstand (a) zur Mittelachse und die stationäre Schwenkstelle (55) der Schubstange (56) im Abstand (b) zur Mittelachse angeordnet ist, wobei der Abstand (b) größer ist als der Abstand (a).

## Claims

1. Tool carrier for soil working or soil treating machines, having a frame with a minimum working width of approximately 8 m, reducible for road travel to a width of up to max 3 m and a transportation height of up to max 4 m, in which a horizontal central carrier (1; 41) is firmly connected to a central frame (6-10; 43) and in which a support arm arrangement (18, 19; 48) is so coupled to a working cylinder (28, 29; 45) that the support arm arrangement and therefore the tool carrier can be moved from the vertical position for road travel into the horizontal, extended working position, wherein
a) to the left and right to the outside an extension (2, 3; 42) is connected to the central carrier (1; 41), said central carrier (1; 41) and the bilateral extensions (2, 3; 42) together having a maximum length of 3 m,
b) to the central frame (6-10; 43) a hinged arm arrangement (13, 14; 48) with a telescopic support arm arrangement (18, 19; 49, 50) is pivotably fixed (at 11, 12; 51) and is connected horizontally to the extension (2, 3; 42) in the working position and
c) the telescopic support arm arrangement (18, 19; 49, 50) comprises a fixed carrier (20, 21; 49) of fixed length and a carrier (22, 23; 50) connected thereto and displaceable with respect thereto, as well as having a tool carrier or cantilever arm (15, 16; 53) firmly connected to and arranged parallel to the longitudinally displaceable carrier (22, 23; 50),
characterized in that
d) between the extension (2, 3, 42) of the central carrier (41) and the tool carrier or cantilever arm (53) there is in each case a flexibly mounted connection (54, 55, 56) of fixed length and that
e) between a bearing point (44) of the central frame (43) and a bearing point (46) of the fixed length telescopic carrier (49) is articulated a working cylinder (45), which pivots the hinged arm arrangement (48) together with the cantilever arm (53) about a pivot point (50) from the vertical inoperative position into the horizontal working position.

2. Tool carrier according to claim 1, characterized in that a push rod (56) is articulated between the tool carrier or cantilever arm (53) and the extension of the central carrier (41) (at 54, 55).

3. Tool carrier according to claim 1, characterized in that the fixed length telescopic carrier (49) concentrically surrounds the displacement telescopic carrier (50) and that the displaceable telescopic carrier (50) is guided in the fixed length telescopic carrier (49).

4. Tool carrier according to claim 2, characterized in that the fixed length telescopic carrier (49) has an elongated slot, in which is guided the displaceable telescopic carrier (50) with the connecting piece (52).

5. Tool carrier according to one of the claims 3 or 4, characterized in that the stationary pivot point (51) of the hinged arm arrangement (48) is positioned with a spacing (a) from the central axis and the stationary pivot point (55) of the push rod (56) with a spacing (b) from the central axis, the spacing (b) being larger than the spacing (a).

## Revendications

1. Porte-outil, destiné à des machines pour le traitement et le travail du sol, pourvu d'un cadre, ayant au moins une largeur de 8 mètres,qui peut être réduit pour le déplacement sur la route à une largeur maximale de 3 mètres et à une hauteur maximale de 4 mètres, comportant un support (1; 41) central et horizontal auquel est fixé un cadre (6-10; 43) central et qui comporte une console (18, 19; 48) reliée de telle façon à un vérin (28, 29; 45) que la console et avec elle le porte-outil peut être déployé de la position verticale pour le déplacement sur route dans la position allongée de travail, dans lequel
a)- des rallonges (2, 3; 42) sont reliées à droite et à gauche au support (1; 41) central, la longueur totale de ces deux rallonges (2, 3; 42) ne dépassant pas 3 mètres,
b)- une armature battante (13, 14; 48) avec une console télescopique (18, 19; 49, 50) est montée de manière pivotante sur le cadre (6, 10; 43) central, ladite armature en position de travail étant reliée horizontalement aux rallonges (2, 3; 42),
c)- la console télescopique (18, 19; 49, 50) comportant un support (20, 21; 49) et pouvant coulisser par rapport à ce premier support et un porte-outil où un bras (15, 16; 53) fixé sur le support (22, 23; 50) coulissant et parallèlement à celui-ci
d)- Caractérisé en ce que entre les rallonges (2, 3; 42) du support (1; 41) central et le porte-outil où le bras est monté un raccord articulé (54, 55, 56) de longueur fixe, et
e)- en ce que entre un point d'appui (44) du cadre central (44) et un point d'appui (46) de la console télescopique (49), ayant une longueur constante, est fixé un vérin (45) qui assure le pivotement autour d'un pivot (50) de l'armature battante (48) avec le bras (53) à partir de la position de repos verticale dans la position de travail horizontale.

2. Porte-outil selon la revendication 1 caractérisé en ce qu'une bielle (56) est montée entre le porte-outil ou le bras (53) et la rallonge du support central (41)

3. Porte-outil selon la revendication 1, caractérisé en ce que le support est guidé dans le support (49) ayant une longueur constante entoure de façon concentrique le support (50) télescopique coulissant et en ce que ce support est guidé dans le support (49) ayant une longueur constante.

4. Porte-outil selon la revendication 2, caractérisé en ce que le support (49) télescopique de longueur constante est pourvu d'une fente longitudinale dans laquelle le support télescopique (50) coulissant est guidé avec la connexion (52).

5. Porte-outil selon une des revendications 3 ou 4, caractérisé en ce que le lieu de pivotement (51) stationnaire de la console (45) se trouve à une distance (a) de l'axe médian et que le lieu de pivotement (55) de la bielle (56) se trouve à une distance (b) de l'axe médian, la distance (b) étant plus grande que la distance (a).
